# NEUE EUROPÄISCHE PATENTSCHRIFT

(11) **EP 3 296 467 B2**
(45) Veröffentlichungstag und Bekanntmachung des Hinweises auf die Entscheidung über den Einspruch: **17.12.2025**
(45) Hinweis auf die Patenterteilung: 12.12.2018
(21) Anmeldenummer: 16189732.7
(22) Anmeldetag: 20.09.2016
(51) Int. Cl.: E02D 13/06

(54) **TIEFBAUGERÄT UND TIEFBAUVERFAHREN**
EXCAVATION EQUIPMENT AND METHOD
EXCAVATRICE ET PROCÉDÉ ASSOCIÉE

(43) Veröffentlichungstag der Anmeldung: 21.03.2018
(73) Patentinhaber: BAUER Spezialtiefbau GmbH, 86529 Schrobenhausen (DE)
(72) Erfinder: Beckhaus, Karsten, 80801 München (DE)
(74) Vertreter: Wunderlich & Heim Patentanwälte PartG mbB

(56) Entgegenhaltungen:
- EP-A1- 1 069 245
- EP-A1- 1 808 533
- EP-A1- 2 716 816
- EP-B1- 0 740 798
- EP-B1- 1 781 862
- DE-A1- 10 310 727
- DE-A1- 102007 051 198
- GB-A- 2 422 389
- US-A1- 2012 200 452
- US-A1- 2016 017 703

## Beschreibung

Die Erfindung betrifft ein Tiefbaugerät gemäß dem Oberbegriff des Anspruchs 1 sowie ein Tiefbauverfahren gemäß dem Oberbegriff des Anspruchs 7.

Ein solches Tiefbaugerät weist eine Trägervorrichtung, ein Bodenbearbeitungswerkzeug, welches einen Boden an einer Bearbeitungsstelle bearbeitet und mindestens eine GPS-Einheit auf, welche an der Trägervorrichtung angeordnet ist und zur Bestimmung der Position der Bearbeitungsstelle ausgebildet ist, wobei die GPS-Einheit mit einem Abstand zu der Bodenbearbeitungsstelle angeordnet ist.

Bei einem solchen Tiefbauverfahren unter Verwendung eines Tiefbaugeräts wird ein Boden an einer Bodenbearbeitungsstelle mit einem Bodenbearbeitungswerkzeug bearbeitet, welches an einer Trägervorrichtung angeordnet ist und eine Position der Bodenbearbeitungsstelle mittels mindestens einer GPS-Einheit bestimmt, welche von der Bearbeitungsstelle beabstandet ist.

Bei der Durchführung von Tiefbauarbeiten, insbesondere solchen, welche ortsgenau vorgenommen werden sollen, besteht die Notwendigkeit, die Position des Bodenbearbeitungswerkzeugs in einem zu bearbeitenden Bereich möglichst genau zu bestimmen. Positionsdaten werden etwa zu entfernten Leitstellen gesendet, so dass ein virtuelles Abbild der Baustellenbearbeitung erstellt werden kann.

Hierbei ist bekannt, eine GPS-Einheit an einem rückwärtigen Bereich des Baugeräts anzuordnen. Der Versatz der GPS-Einheit gegenüber dem Bodenbearbeitungswerkzeug kann hierbei in Form eines definierten Abstands bei der Berechnung der Position des Bodenbearbeitungswerkzeugs berücksichtigt werden. Dabei wird davon ausgegangen, dass das Bodenbearbeitungswerkzeug gegenüber der GPS-Einheit einen konstanten Abstand aufweist. Grundsätzlich können jedoch Abweichungen auftreten, etwa ein Lagerspiel in Gerätekomponenten, der Austausch des Bodenwerkzeugs gegen ein Bodenbearbeitungswerkzeug anderer Form oder Größe sowie Mastverstellungen, - neigungen und -umbauten.

Weiterhin ist es bekannt, die GPS-Einheit relativ nahe an der Bearbeitungsstelle anzuordnen, etwa am Mastkopf. Allerdings ist bei einer Positionierung am Mastkopf die empfindliche GPS-Einheit verstärkt Witterungsbedingungen ausgesetzt. Auch eine Wartung wird erheblich erschwert. Zudem können ebenfalls Abweichungen, wie ein Lagerspiel oder Ausbiegungen des Mastes auftreten, welche zu einer Verfälschung der bestimmten Bodenbearbeitungswerkzeugposition führen.

Aus der GB 2 422 389 A ist ein Tiefbaugerät bekannt, bei dem an einem Mastkopf GPS-Empfänger angeordnet sind, um entsprechende Positionsinformationssignale zu erhalten und eine relative Abweichung des Baugeräts zu einer vorbestimmten Bohrposition zu bestimmen.

In der US 2012/0200452 A1 ist beschrieben, einen Reflektor an einem Bohrpfahl als ein in den Boden einzubringendes Gründungselement mittels eines Sensors anzumessen, um die Position des Bohrpfahls zu bestimmen.

Insbesondere beim Vorsehen einer Vielzahl von aufeinander abgestimmten Tiefbauarbeiten ist jedoch eine hohe Genauigkeit bei der Positionsbestimmung der durchgeführten Bodenbearbeitungen von großer Bedeutung.

Der Erfindung liegt daher die **Aufgabe** zugrunde, ein Tiefbaugerät sowie ein Tiefbauverfahren unter Verwendung eines Tiefbaugeräts anzugeben, welche auch unter sich verändernden Bedingungen eine besonders hohe Genauigkeit bei der Positionsbestimmung einer durchgeführten Bodenbearbeitung ermöglicht.

Die Aufgabe wird nach der Erfindung einerseits durch ein Tiefbaugerät mit den Merkmalen des Anspruchs 1 sowie durch ein Tiefbauverfahren mit den Merkmalen des Anspruchs 7 gelöst.

Vorteilhafte Ausführungsformen sind in den abhängigen Ansprüchen, der Beschreibung und den Figuren angegeben.

Das erfindungsgemäße Tiefbaugerät ist dadurch gekennzeichnet, dass zusätzlich zu der GPS-Einheit eine Messeinrichtung vorgesehen ist, welche ausgebildet ist, den Abstand zwischen der GPS-Einheit und dem Bearbeitungswerkzeug zu bestimmen.

Ein Grundgedanke der vorliegenden Erfindung liegt darin, die Positionsbestimmung eines Bodenbearbeitungswerkzeugs gegenüber einer GPS-Einheit, statt durch Hinterlegung eines fixen Abstandswerts zu der vorgegebenen GPS-Einheit, durch eine beliebig oft durchführbare Messung mittels einer Messeinrichtung vorzusehen. Das GPS-Signal wird durch das Messsignal ergänzt, so dass stets eine exakte Position der Bearbeitungsstelle ermittelt wird.

Die GPS-Einheit kann dabei in einer geeigneten und geschützten Position vorgesehen werden.

Hierbei kann die Messeinrichtung aus den von der GPS-Einheit empfangenen Positionsdaten und dem bestimmten Abstand der GPS-Einheit zum Bodenbearbeitungswerkzeug eine Position des Bodenbearbeitungswerkzeugs besonders genau bestimmen.

Die von der GPS-Einheit empfangenen Positionsdaten können insbesondere die Position der GPS-Einheit sein, wie sie durch Triangulation von mindestens vier, vorzugsweise fünf Satelliten bestimmt und an die GPS-Einheit übermittelt werden.

Die Messeinrichtung ist hierbei ausgebildet, einen Abstand des Bodenbearbeitungswerkzeugs zu der GPS-Einheit, insbesondere in einem unteren, beziehungsweise einem bodennahen Bereich am Bodenbearbeitungswerkzeug, zu bestimmen. Weiterhin wird die Abstandsmessung zwischen Messgerät und Bodenbearbeitungswerkzeug in einer horizontalen Ebene, welche vorzugsweise durch das Messgerät verläuft, bestimmt. Die Bestimmung des Abstands zwischen der Messeinrichtung und dem Bodenbearbeitungswerkzeug kann hierbei beliebig oft, insbesondere in regelmäßigen Abständen, wiederholt werden. Weiterhin ist die Messeinrichtung ausgebildet, basierend auf der Abstandsmessung zwischen der Messeinrichtung und dem Bodenbearbeitungswerkzeug sowie einem hinterlegten Abstand zwischen der Messeinrichtung und der GPS-Einheit, einen Abstand der GPS-Einheit, insbesondere in dem Moment der Messung, zu dem Bodenbearbeitungswerkzeug zu bestimmen.

Somit können insbesondere Veränderungen des Abstands zwischen der GPS-Einheit und dem Bodenbearbeitungswerkzeug aufgrund von beispielsweise Mastverstellung, Lagerspiel, Umbauten, welche den Abstand zwischen GPS-Einheit und Bodenbearbeitungswerkzeug beeinflussen können oder einer Änderung des Werkzeugs bei der Positionierung des Bodenbearbeitungswerkzeugs, berücksichtigt werden. Durch eine entsprechende Anzahl von Messungen, von beispielsweise 1 Messung pro Sekunde oder mehr, kann die Position des Bodenbearbeitungswerkzeugs in dem zu bearbeitenden Bereich zu einem beliebigen Zeitpunkt, insbesondere in Echtzeit bestimmt werden. Dies kann insbesondere eine Korrektur der Ausrichtung des Bodenbearbeitungswerkzeugs während seiner Verwendung und nachfolgend eine Überprüfung der veränderten Position ermöglichen.

Grundsätzlich kann die Messeinrichtung an der GPS-Einheit angeordnet sein. Der Abstand der Messeinrichtung zu dem Bodenbearbeitungswerkzeug kann dem Abstand der GPS-Einheit zu dem Bodenbearbeitungswerkzeug somit entsprechen. Die Messeinrichtung und die GPS-Einheit können als ein einheitliches Modul ausgebildet sein, welches bedarfsgerecht an einer Stelle des Tiefbaugeräts oder auch in einem Bereich um das Tiefbaugerät herum, insbesondere freistehend als einzelnes Element, angeordnet werden kann.

Besonders bevorzugt ist es nach der Erfindung, dass die Messeinrichtung von der GPS-Einheit beabstandet ist. Die Messeinrichtung kann an einer Stelle angeordnet sein, welche für die Abstands- oder Entfernungsmessung besonders geeignet ist. Dabei bestimmt rechnerisch die Messeinrichtung, welche eine Rechnereinheit umfassen kann, den Gesamtabstand zwischen der GPS-Einheit und dem Bearbeitungswerkzeug aus dem gemessenen Teilabstand zwischen der Messeinrichtung und dem Bearbeitungswerkzeug und dem festen Teilabstand zwischen der Messeinrichtung und der GPS-Einheit. Dies erlaubt eine hohe Flexibilität bei der Anordnung der Messeinrichtung, insbesondere der Messeinheit.

Besonders vorteilhaft ist es nach einer Weiterbildung der Erfindung, dass die GPS-Einheit an einem Oberwagen des Tiefbaugeräts vorgesehen ist. Grundsätzlich kann das Tiefbaugerät einstückig ausgebildet sein. Das Tiefbaugerät kann jedoch auch aus einem Oberwagen und einem Unterwagen gebildet sein, wobei der Oberwagen gegenüber dem Unterwagen zumindest in einer in etwa horizontalen Ebene verschwenkbar ist. Vorzugsweise ist an dem Oberwagen auch die Trägervorrichtung mit dem Bodenbearbeitungswerkzeug angeordnet. Durch die Anordnung der GPS-Einheit an dem Oberwagen, kann die Position der GPS-Einheit gegenüber dem Bodenbearbeitungswerkzeug in erster Näherung festgelegt sein. Das Vorsehen der GPS-Einheit ist insbesondere im Hinblick auf einen direkten Blickkontakt zu den positionsbestimmenden Satelliten vorteilhaft, also auch im Hinblick auf Umbauten an dem Tiefbaugerät mit geringem Umbauaufwand verbunden.

Es ist vorgesehen, dass die Messeinrichtung als eine berührungslos arbeitende Messeinrichtung ausgebildet ist. Eine solche Messeinrichtung kann besonders wartungsarm in einem entsprechenden Gehäuse vorgesehen werden, welche die Messeinrichtung vor Verschmutzung oder Beschädigung schützt. Weiterhin kann durch die berührungslose Messung ein besonders wartungsarmer Betrieb mit geringem Verschleiß der Messeinrichtung ermöglicht sein.

Erfindungsgemäß ist es, dass die Messeinrichtung einen Fächerlaser aufweist. Der Laser kann durch Abtasten des Bodenbearbeitungswerkzeugs besonders genau die Position desselbigen gegenüber der Messeinrichtung messen. Eine Bestimmung des Abstands des Bodenbearbeitungswerkzeugs gegenüber der GPS-Einheit kann somit besonders präzise ermöglicht sein. Hierbei kann der Laser ausgebildet sein, einen zuvor bestimmten, relevanten Bezugspunkt oder Bereich an dem Bodenbearbeitungswerkzeug bei der Abstandsmessung zu berücksichtigen. Hierzu kann ein solcher relevanter Punkt oder Bereich zuvor mittels des Lasers fixiert werden oder auch mit einer Markierung, insbesondere einem Reflektor für das Laserlicht versehen werden. Der Laser kann ausgebildet sein dem vordefinierten Bereich oder Punkt auch bei einer vertikalen Positionsveränderung, beispielsweise beim Abtäufen eines Bohrlochs zu folgen und mittels einer Winkelbestimmung zwischen, beispielsweise einer horizontalen Ebene und dem Laser-Messungsstrahl, den tatsächlichen horizontalen Abstand des Messpunktes oder Messbereichs an dem Bodenbearbeitungswerkzeug zu der GPS-Einheit bestimmen.

Vorzugsweise ist das erfindungsgemäße Tiefbaugerät als ein Bohrgerät ausgebildet. Ein solches Bohrgerät kann beispielsweise eine Bohrwendel aufweisen, welche sich um eine zentrale Bohrwendelachse dreht. Hierbei kann der Abstand der GPS-Einheit zu dem Bodenbearbeitungsgerät insbesondere ausgehend von der Drehachse bestimmt werden.

Nach einer Weiterbildung kann das erfindungsgemäße Tiefbaugerät als eine Schlitzwandfräse ausgebildet sein. Diese kann mindestens einen, vorzugsweise zwei, um horizontal verlaufende Rotationsachsen rotierende Räder oder Trommeln aufweisen, welche an ihrem Außenumfang Werkzeuge zum Bearbeiten eines Bodens aufweisen können. Die Trommeln oder Räder können an einem Grundkörper befestigt sein, über welchen die mindestens eine Trommel/Rad der Schlitzwandfräse mit der Trägervorrichtung des Tiefbaugeräts verbunden sein kann. Vorzugsweise wird bei der Positionsbestimmung der Schlitzwandfräse mittels der Messeinrichtung der Abstand der GPS-Einheit zu dem Grundkörper bestimmt.

Das erfindungsgemäße Tiefbauverfahren unter Verwendung eines Tiefbaugeräts nach einem der Ansprüche 1 bis 6 ist dadurch gekennzeichnet, dass ein Abstand zwischen dem Bodenbearbeitungswerkzeug und der GPS-Einheit mit einer Messeinrichtung bestimmt wird.

Ein weiterer Grundgedanke der vorliegenden Erfindung besteht darin, mittels einer Messeinrichtung die Position eines Bodenbearbeitungswerkzeugs in Relation zu einer vorgesehenen GPS-Einheit flexibel anzupassen und situationsadäquat zu bestimmen. Hierbei kann die GPS-Einheit vorzugsweise auf dem Tiefbaugerät ortsfest vorgesehen werden, wobei der tatsächliche Abstand des Bodenbearbeitungsgeräts zu der GPS-Einheit mittels der Messeinrichtung bestimmt werden kann. Vorzugsweise wird für die Bestimmung des Abstands des Bodenbearbeitungswerkzeugs eine zentrale Rotationsachse oder falls nötig ein fixer, der Messeinrichtung zugewandter Punkt oder Bereich an dem Werkzeugs festgelegt.

Es ist vorgesehen, dass der Abstand mittels einer Messeinrichtung berührungslos bestimmt wird. Eine solche berührungslose Messung kann mit einem beliebigen, dem Fachmann geläufigen Messverfahren durchgeführt werden. Durch eine geeignet hohe Wiederholrate der Messung, beispielsweise mit einer oder mehreren Messungen pro Sekunde, kann in Echtzeit die Position des Bodenbearbeitungswerkzeugs bestimmt werden.

Vorgesehen ist es nach der Erfindung, dass der Abstand unter Verwendung mindestens eines Fächerlasers als Messeinrichtung bestimmt wird. Die Bestimmung der Position des Bodenbearbeitungswerkzeugs kann vorzugsweise bei Beginn der Bodenbearbeitungsarbeiten durchgeführt werden, was bei der Positionierung des Werkzeugs hilfreich sein kann. Die Position des Bodenbearbeitungswerkzeugs kann jedoch zu jedem beliebigen Zeitpunkt überprüft, bestimmt und basierend auf der bestimmten Position korrigiert werden.

Nach dem erfindungsgemäßen Tiefbauverfahren wird ein Bohrloch oder ein Frässchlitz erstellt. Hierbei kann die Messeinrichtung insbesondere einen Abstand einer Drehachse (Bohrwendel), beziehungsweise den Abstand eines Außenbereichs der Bohrwendel an den rotierenden Wendelblattkannten oder die Position eines Grundkörpers einer Schlitzwandfräse bestimmen.

Vorgesehen ist es nach der Erfindung, dass ein Gründungselement, insbesondere ein Bohrpfahl oder ein Schlitzwandsegment, erstellt wird. Diese werden während des Abteufens oder nach seiner Beendigung durch Befüllen der Bodenvertiefung mit geeignetem, vorzugsweise abbindendem Material gebildet.

Die Erfindung wird nachfolgend anhand der beigefügten, schematischen Zeichnung weiter erläutert. In der Zeichnung zeigt:

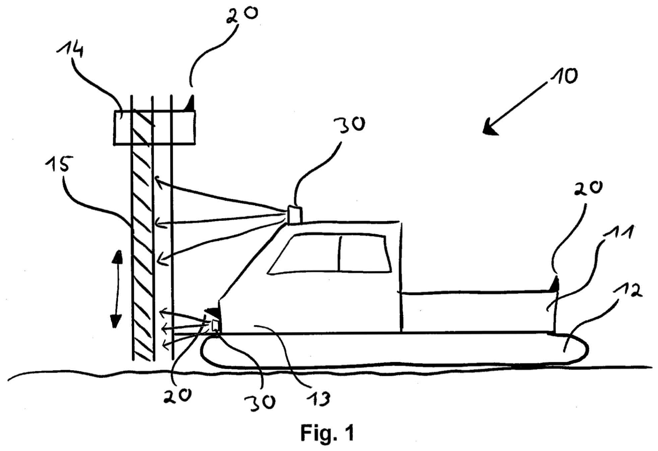

- Fig. 1:: eine schematische Seitenansicht eines erfindungsgemäßen Tiefbaugeräts.

In Fig. 1 ist eine bevorzugte Ausführungsform des erfindungsgemäßen Tiefbaugeräts 10 dargestellt. Das Tiefbaugerät 10 kann einen Unterwagen 12 aufweisen, auf welchem ein Oberwagen 11 angeordnet sein kann. Weiterhin kann das Tiefbaugerät 10 eine Trägervorrichtung 13 aufweisen, welche vorzugsweise an dem Oberwagen 11 angeordnet ist. An der Trägervorrichtung 13 kann ein Bohrantrieb 14 angeordnet sein, welcher verfahrbar mit der Trägervorrichtung 13 verbunden sein kann und ein Bodenbearbeitungswerkzeug 15, insbesondere in Form einer Bohrwendel antreiben kann. Anstelle des Bohrgeräts kann auch eine Schlitzwandfräse vorgesehen sein.

Insbesondere in einem hinteren Bereich kann auf dem Oberwagen 11 eine GPS-Einheit 20 vorgesehen sein, welcher ausgebildet ist, ein Positionssignal (via GPS-Satelliten) zu senden und/oder zu empfangen. Weiterhin kann insbesondere an dem Oberwagen 11 eine Messeinrichtung 30 vorgesehen sein, welche ausgebildet ist, einen Abstand zwischen der GPS-Einheit 20 und dem Bodenbearbeitungswerkzeug 15 zu bestimmen. Vorzugsweise kann die Messeinrichtung 30 hierfür eine Abstandsmessung zwischen der Messeinrichtung 30 und dem Bodenbearbeitungswerkzeug 15 durchführen. Anhand eines vorbestimmten Abstands der GPS-Einheit 20 zu der Messeinrichtung 30 sowie dem gemessenen Abstand zwischen dem Bodenbearbeitungswerkzeug 15 und der Messeinrichtung 30 kann die Messeinrichtung 30 den Abstand des GPS-Einheit 20 von dem Bodenbearbeitungswerkzeug 15 bestimmen beziehungsweise berechnen. Vorzugsweise ist die Messeinrichtung 30 in einem vorderen unteren Bereich des Tiefbaugeräts 10, welcher dem Bodenbearbeitungswerkezug zugewandt ist, angeordnet insbesondere ausgebildet, eine Messung in einem unteren Bereich des Bodenbearbeitungswerkzeugs 15 durchzuführen. Die Messung in dem unteren Bereich des Bodenbearbeitungswerkzeugs 15 kann vorzugsweise oberhalb der Bodenoberfläche durchgeführt werden. Durch die bodennahe Bestimmung des Abstands der GPS-Einheit 20 von dem Bodenbearbeitungswerkzeug 15 kann der tatsächliche Kontaktpunkt des Bodenbearbeitungswerkzeugs 15 mit der Oberfläche des zu bearbeitenden Boden besonders genau bestimmt werden. Ebenfalls kann die GPS-Einheit 20 gemeinsam mit der Messeinrichtung 30 in einer gemeinsamen Position vorgesehen werden. Hierdurch kann der mittels der Messeinrichtung 30 gemessene Abstand des Bodenbearbeitungswerkzeugs 15 zu der GPS-Einheit 20 direkt in eine Position des Bodenbearbeitungswerkzeugs 15 mit Bezug auf die GPS-Einheit 20 umgesetzt werden.

Alternativ zum Vorsehen der GPS-Einheit 20 und/oder der Messeinrichtung 30 an dem Oberwagen 11 beziehungsweise in einem oberen Bereich des Tiefbaugeräts, kann die GPS-Einheit 20 und/oder die Messeinrichtung 30 auch an der Trägervorrichtung 13 des Tiefbaugeräts 10 vorgesehen werden. Hierdurch kann der Abstand zwischen der GPS-Einheit 20, der Messeinrichtung 30 und dem Bodenbearbeitungswerkzeug 15 verringert werden, was einer Genauigkeit bei der Bestimmung der Position des Bodenbearbeitungswerkzeugs 15 zuträglich sein kann. Die Messeinrichtung 30 kann ausgebildet sein, den Abstand eines zuvor definierten Bezugspunkts an den Bodenbearbeitungswerkzeug 15 zu der Messeinrichtung 30 wiederholt oder dauerhaft zu bestimmen. Ein solcher Bezugspunkt kann insbesondere dadurch gekennzeichnet sein, dass dieser sich in einem gleichbleibenden Winkel vorzugsweise von 0°, ausgehend von einer horizontalen Ebene, welche durch die Messeinrichtung 30 verläuft, zu der Messeinrichtung 30 befindet. Alternativ kann auch ein dynamischer Bezugspunkt bestimmt werden, welcher beim Verfahren des Bodenbearbeitungswerkzeugs beispielsweise entlang der Trägervorrichtung 13 seine Lage in Bezug auf die Messeinrichtung 30 verändern kann. Dies kann beispielsweise der Bohrantrieb 14 sein, welcher beim Erstellen eines Bohrlochs mittels des Bodenbearbeitungswerkzeugs 15 aus einer erhöhten ersten Position oberhalb der in Fig. 1 dargestellten Messeinrichtung 30 langsam zu einer unteren Position beziehungsweise einer bodennahen Position verfahren wird. Hierbei kann die Messeinrichtung 30 den (horizontalen) Abstand des Bohrantriebs 14 zu der Messeinrichtung 30 zu jedem Zeitpunkt bestimmen und den sich mit dem Abteufen des Bohrlochs verändernde Winkel der Messgeraden (z.B. Laser) zwischen Bohrantrieb 14 und der horizontalen Ebene, welche vorzugsweise durch die Messeinrichtung 30 verläuft, den Abstand des Bohrantriebs 14 zu der Messeinrichtung 30 ermitteln und somit den Abstand der GPS-Einheit 20 zu dem Bodenbearbeitungswerkzeug 15 beziehungsweise zu dem Bohrantrieb 14, welcher oberhalb des Bodenbearbeitungswerkzeugs 15 angeordnet sein kann, ermitteln.

Grundsätzlich kann nach der Erfindung die Messeinrichtung 30 und/ oder die GPS-Einheit 20 in einem vorderen Bereich der des Tiefbaugeräts vorgesehen werden, wobei insbesondere Messungen im bodennahen Bereich durchführbar sind.

## Patentansprüche

1. Tiefbaugerät (10) zum Erstellen eines Gründungselementes im Boden mit
- einer Trägervorrichtung (13),
- einem Bodenbearbeitungswerkzeug (15), welches einen Boden an einer Bearbeitungsstelle bearbeitet, wobei als eine Bodenvertiefung ein Bohrloch oder ein Frässchlitz erstellbar ist, welche während des Abteufens oder nach seiner Beendigung zum Erstellen des Gründungselementes mit einem geeigneten Material verfüllbar ist, und
- mindestens einer GPS-Einheit (20), welche an der Trägervorrichtung (13) angeordnet ist und zur Bestimmung der Position der Bearbeitungsstelle ausgebildet ist,
- wobei die GPS-Einheit (20) mit einem Abstand zu der Bodenbearbeitungsstelle angeordnet ist,
- wobei zusätzlich zu der GPS-Einheit (20) eine Messeinrichtung (30) vorgesehen ist,
**dadurch gekennzeichnet,**
**dass** die Messeinrichtung (30) einen Fächerlaser aufweist und ausgebildet ist, den Abstand zwischen der GPS-Einheit (20) und dem Bodenbearbeitungswerkzeug (15) mit einer Abstandsmessung der Messeinrichtung (30) in einer horizontalen Ebene zum Bodenbearbeitungswerkzeug (15) sowie einem hinterlegten Abstand zwischen der Messeinrichtung (30) und der GPS-Einheit (20) zu bestimmen.

2. Tiefbaugerät nach Anspruch 1,
**dadurch gekennzeichnet,**
**dass** die Messeinrichtung (30) von der GPS-Einheit (20) beabstandet ist.

3. Tiefbaugerät nach Anspruch 1 oder 2,
**dadurch gekennzeichnet,**
**dass** die GPS-Einheit (20) an einem Oberwagen (11) des Tiefbaugeräts (10) vorgesehen ist.

4. Tiefbaugerät nach einem der Ansprüche 1 bis 3,
**dadurch gekennzeichnet,**
**dass** die Messeinrichtung (30) als eine berührungslos arbeitende Messeinrichtung (30) ausgebildet ist.

5. Tiefbaugerät nach einem der Ansprüche 1 bis 54
**dadurch gekennzeichnet,**
**dass** das Tiefbaugerät (10) als ein Bohrgerät ausgebildet ist.

6. Tiefbaugerät nach einem der Ansprüche 1 bis 4,
**dadurch gekennzeichnet,**
**dass** das Tiefbaugerät (10) als eine Schlitzwandfräse ausgebildet ist.

7. Tiefbauverfahren zum Erstellen eines Gründungselementes im Boden unter Verwendung eines Tiefbaugerätes (10) nach einem der Ansprüche 1 bis 6, wobei
- ein Boden an einer Bodenbearbeitungsstelle mit einem Bodenbearbeitungswerkzeug (15) bearbeitet wird, welches an einer Trägervorrichtung (13) angeordnet ist, wobei als eine Bodenvertiefung ein Bohrloch oder ein Frässchlitz abgeteuft wird, welche während des Abteufens oder nach seiner Beendigung zum Bilden des Gründungselementes mit einem geeigneten Material verfüllt wird, und
- eine Position der Bodenbearbeitungsstelle mittels mindestens einer GPS-Einheit (20) bestimmt wird, welche von der Bearbeitungsstelle beabstandet ist,
**dadurch gekennzeichnet,**
**dass** ein Abstand zwischen dem Bodenbearbeitungswerkzeug (15) und der GPS-Einheit (20) mit einer Messeinrichtung (30), welche einen Fächerlaser aufweist, mittels einer Abstandsmessung der Messeinrichtung (30) in einer horizontalen Ebene zum Bodenbearbeitungswerkzeug (15) sowie einem hinterlegten Abstand zwischen der Messeinrichtung (30) und der GPS-Einheit (20) bestimmt wird.

8. Tiefbauverfahren nach Anspruch 7,
**dadurch gekennzeichnet,**
**dass** der Abstand mittels der Messeinrichtung (30) berührungslos bestimmt wird.

9. Tiefbauverfahren nach einem der Ansprüche 7 bis 8,
**dadurch gekennzeichnet,**
**dass** als Gründungselement ein Bohrpfahl oder ein Schlitzwandsegment erstellt wird.

## Claims

1. Foundation engineering apparatus (10) for creating a foundation element in the ground having
- a carrier device (13),
- a ground working tool (15) which works the ground at a working location, wherein a borehole or a cut trench can be created as a ground recession, which can be filled with a suitable material during sinking or after completion to create the foundation element, and
- at least one GPS-unit (20) which is arranged on the carrier device (13) and designed to determine the position of the working location,
- wherein the GPS-unit (20) is arranged at a distance to the ground working location,
- wherein a measuring means (30) is provided in addition to the GPS-unit (20),
**characterized in that**
the measuring means (30) comprises a fan laser and is designed to determine the distance between the GPS-unit (20) and the ground working tool (15) with a distance measurement of the measuring means (30) in a horizontal plane to the ground working tool (15) as well as a stored distance between the measuring means (30) and the GPS-unit (20).

2. Foundation engineering apparatus according to claim 1,
**characterized in that**
the measuring means (30) is spaced from the GPS-unit (20).

3. Foundation engineering apparatus according to claim 1 or 2,
**characterized in that**
the GPS-unit (20) is provided on an upper carriage (11) of the foundation engineering apparatus (10).

4. Foundation engineering apparatus according to any one of claims 1 to 3,
**characterized in that**
the measuring means (30) is designed as a contact-free operating measuring means (30).

5. Foundation engineering apparatus according to any one of claims 1 to 4,
**characterized in that**
the foundation engineering apparatus (10) is designed as a drilling apparatus.

6. Foundation engineering apparatus according to any one of claims 1 to 4,
**characterized in that**
the foundation engineering apparatus (10) is designed as a diaphragm wall cutter.

7. Foundation engineering method for creating a foundation element in the ground using a foundation engineering apparatus (10), to any one of claims 1 to 6, wherein
- ground at a ground working location is worked with a ground working tool (15) which is arranged on a carrier device (13), wherein a borehole or a cut trench is sunk as a ground recession, which is ficlled with a suitable material during or after sinking to form the foundation element, and
- a position of the ground working location is determined by means of at least one GPS-unit (20) which is spaced from the working location,
**characterized in that**
a distance between the ground working tool (15) and the GPS-unit (20) is determined with a measuring means (30), which comprises a fan laser, by means of a distance measurement of the measuring means (30) in a horizontal plane to the ground working tool (15) as well as a stored distance between the measuring means (30) and the GPS-unit (20).

8. Foundation engineering method according to claim 7,
**characterized in that**
the distance is determined contact-free by means of the measuring means (30).

9. Foundation engineering method according to any one of claims 7 to 8,
**characterized in that**
as a foundation element a bored pile or a diaphragm wall segment is produced.

## Revendications

1. Engin de génie civil (10) pour la réalisation d'un élément de fondation dans le sol avec
- un dispositif porteur (13),
- un outil de préparation de sol (15), qui prépare un sol au niveau d'un emplacement de préparation, un trou de forage ou une rainure de fraisage pouvant être réalisé(e) sous forme de renfoncement dans le sol et pouvant être rempli(e) pendant le forage ou après celui-ci avec un matériau approprié afin de créer l'élément de fondation, et
- au moins une unité GPS (20), qui est disposée au niveau du dispositif porteur (13) et est réalisée pour définir la position de l'emplacement de préparation,
- dans lequel l'unité GPS (20) est disposée à une distance par rapport à l'emplacement de préparation de sol,
- dans lequel est prévu en plus de l'unité GPS (20) un système de mesure (30),
**caractérisé en ce**
**que** le système de mesure (30) présente un laser en éventail et est réalisé pour déterminer la distance entre l'unité GPS (20) et l'outil de préparation de sol (15) avec une mesure de distance du système de mesure (30) dans un plan horizontal par rapport à l'outil de préparation de sol (15) et d'une distance enregistrée entre le système de mesure (30) et l'unité GPS (20).

2. Engin de génie civil selon la revendication 1,
**caractérisé en ce**
**que** le système de mesure (30) se trouve à distance de l'unité GPS (20).

3. Engin de génie civil selon la revendication 1 ou 2,
**caractérisé en ce**
**que** l'unité GPS (20) est prévue au niveau d'un chariot supérieur (11) de l'engin de génie civil (10).

4. Engin de génie civil selon l'une quelconque des revendications 1 à 3,
**caractérisé en ce**
**que** le système de mesure (30) est réalisé sous la forme d'un système de mesure (30) fonctionnant sans contact.

5. Engin de génie civil selon l'une quelconque des revendications 1 à 4,
**caractérisé en ce**
**que** l'engin de génie civil (10) est réalisé sous la forme d'un engin de forage.

6. Engin de génie civil selon l'une quelconque des revendications 1 à 4,
**caractérisé en ce**
**que** l'engin de génie civil (10) est réalisé sous la forme d'une fraise pour parois moulées.

7. Procédé de génie civil pour la réalisation d'un élément de fondation dans le sol utilisant un engin de génie civil (10) selon l'une quelconque des revendications 1 à 6, dans lequel
- un sol est préparé au niveau d'un emplacement de préparation de sol avec un outil de préparation de sol (15), qui est disposé au niveau d'un dispositif porteur (13), un trou de forage ou une rainure fraisée étant creusée comme excavation dans le sol, laquelle est remplie d'un matériau approprié pendant ou après le creusement afin de former l'élément de fondation, et
- une position de l'emplacement de préparation de sol est déterminée au moyen d'au moins une unité GPS (20), qui est tenue à distance de l'emplacement de préparation,
**caractérisé en ce**
**qu'**une distance entre l'outil de préparation de sol (15) et l'unité GPS (20) est déterminée avec un système de mesure (30), présente un laser en éventail, au moyen d'une mesure de distance entre le système de mesure (30) dans un plan horizontal et l'outil de préparation de sol (15) et d'une distance enregistrée entre le système de mesure (30) et l'unité GPS (20).

8. Procédé de génie civil selon la revendication 7,
**caractérisé en ce**
**que** la distance est déterminée sans contact au moyen du système de mesure (30).

9. Procédé de génie civil selon l'une quelconque des revendications 7 à 8,
**caractérisé en ce**
**que**, comme élément de fondation un pieu foré ou un segment de paroi moulée est créé.
